# EUROPÄISCHE PATENTSCHRIFT

(11) **EP 3 592 597 B1**
(45) Veröffentlichungstag und Bekanntmachung des Hinweises auf die Patenterteilung: **03.05.2023**
(21) Anmeldenummer: 18710030.0
(22) Anmeldetag: 07.03.2018
(51) Int. Cl.: B60L 58/18, B60L 58/14, B60L 58/15

(54) **VERFAHREN ZUM BETREIBEN EINES BATTERIEGESPEISTEN ELEKTRISCHEN ANTRIEBSSYSTEMS EINES UNTERSEEBOOTES**
SUBMARINE AND METHOD FOR OPERATING A BATTERY-FED ELECTRIC DRIVE SYSTEM OF A SUBMARINE
SOUS-MARIN ET PROCÉDÉ POUR FAIRE FONCTIONNER UN SYSTÈME D'ENTRAÎNEMENT ÉLECTRIQUE ALIMENTÉ PAR BATTERIE D'UN SOUS-MARIN

(30) Priorität: 08.03.2017 DE 102017002112
(43) Veröffentlichungstag der Anmeldung: 15.01.2020
(73) Patentinhaber: thyssenkrupp Marine Systems GmbH, 24143 Kiel (DE); thyssenkrupp AG, 45143 Essen (DE)
(72) Erfinder: JANKE, Alexander, 24145 Kiel (DE); DANNENBERG, Norbert, 24220 Böhnhusen (DE)
(74) Vertreter: thyssenkrupp Intellectual Property GmbH
(86) Internationale Anmeldenummer: PCT/EP2018/055682
(87) Internationale Veröffentlichungsnummer: WO 2018/162602

(56) Entgegenhaltungen:
- EP-A1- 2 840 253
- DE-A1-102012 222 901
- DE-A1-102014 114 792
- US-A1- 2011 037 318

## Beschreibung

Die Erfindung betrifft ein Verfahren zum Betreiben eines Antriebssystems eines Unterseebootes gemäß dem Oberbegriff des Anspruchs 1.

Unterseeboote weisen zur Versorgung eines Antriebes, aber auch zur Versorgung sonstiger Verbraucher, wie beispielsweise Klimatisierungsanlagen oder Kommunikationseinrichtungen, mindestens ein Gleichspannungsnetz bzw. mindestens ein Fahrnetz auf. Gespeist wird dieses Fahrnetz durch ein Verbrennungsaggregat, Batterien oder/und durch Brennstoffzellen.

Da es für Unterseeboote ganz wesentlich ist, dass die elektrischen Verbraucher auch bei Unterwasserfahrten mit ausreichend elektrischer Energie versorgt werden, muss das Antriebssystem unabhängig von dem Verbrennungsaggregat betreibbar sein. Dazu sind dem mindestens einem Fahrnetz mehrere parallele Batteriestränge zuordbar, die als Energiespeicher dienen. Diese Batteriestränge weisen jeweils eine Vielzahl von in Reihe geschalteten Batteriemodulen bzw. -zellen auf. Üblicherweise weist das Antriebssystem eines Unterseebootes bis zu 60 Batteriestränge auf, welche auf ein oder mehrere Fahrnetze verteilt sein können. In diesem Zusammenhang ist die DE 10 2015 216 097 A1 zu nennen.

Üblicherweise werden die Batteriestränge während der Überwasserfahrt durch das Verbrennungsaggregat aufgeladen und während der Unterwasserfahrt aufgrund der Versorgung der elektrischen Verbraucher entladen. Es ist jedoch auch denkbar, dass die Batteriestränge durch die Brennstoffzellen oder durch den Antrieb selbst aufgeladen werden.

Bekanntermaßen ist die Parallelschaltung von Batterien keineswegs unproblematisch, da aufgrund unterschiedlicher Batterieeigenschaften bzw. Ladezustände Ausgleichströme zwischen den einzelnen Batterien bzw. Batteriesträngen fließen können. Daher werden die parallelen Batteriestränge über beispielsweise DC-DC-Steller bzw. Gleichstromumrichter voneinander entkoppelt. Allerdings führt auch eine derartige Entkopplung paralleler Batteriestränge über DC-DC-Steller zu einer Belastung der einzelnen Batteriestränge, da das Entladen und das Aufladen unabhängig davon erfolgt, wie hoch die "Rest-Kapazitäten" bzw. der Ladezustand der einzelnen Stränge ist. Ein Entladen oder Aufladen ohne Berücksichtigung des Ladezustandes kann jedoch zu einer Tiefenentladung oder Überladung und somit zu einer irreversiblen Schädigung der Batterien führen. In diesem Zusammenhang ist die DE 10 2014 109 092 A1 zu nennen.

Um dies zu vermeiden, müssten sämtliche an dem Lade- und Entladevorgang beteiligten Batteriestränge über eine untereinander abgestimmte Regelung bzw. Kommunikationseinrichtung koordiniert werden. Dies birgt jedoch den Nachteil in sich, dass ein erhöhter Kommunikations- und Regelungsaufwand zwischen den einzelnen Strängen nötig ist und bei einem Ausfall dieser notwendigen Regelungs- oder Kommunikationseinrichtungen wiederum ein gleichmäßiges Entladen der Batteriestränge nicht mehr gewährleistet werden kann. Insbesondere bei hohen Zyklenzahlen, d. h. bei häufigem Auf- und Entladen der Batterien, kann ein ungleichmäßiges Auf- und Entladen wiederum zur Überladung und Tiefenentladung der einzelnen Stränge führen. Diese Schäden resultieren in einer verkürzten Lebenszeit der Batterien, was insbesondere für den Betrieb von Unterseebooten zu gravierenden Konsequenzen führen kann.

Ferner offenbart die DE 10 2014 114 792 A1 ein Verfahren zum Betrieb eines Stromnetzes, insbesondere eines Stromnetzes eines Wasserfahrzeugs, wobei das Stromnetz mit einer Batterievorrichtung zur Zwischenspeicherung von Energie verbunden ist.

Der Erfindung liegt die Aufgabe zugrunde, ein Verfahren zum Betreiben eines Antriebssystems eines Unterseebootes zu schaffen, mit dem ein Entladen der einzelnen Batteriestränge auf eine gleichmäßige Art und Weise möglich ist.

Ein Verfahren zur Lösung dieser Aufgabe weist die Maßnahmen des Anspruchs 1 auf. Demnach ist es vorgesehen, dass die jeweiligen Ladezustände (SOC) der mindestens zwei Batteriesträngen eines Fahrnetzes miteinander synchronisiert werden, indem von jeweils einem Batterie-Management-System (BMS) SOC eines jeden Batteriestranges gemessen wird und eine Strangspannung eines jeden Batteriestranges von dem jeweiligen DC-DC-Steller anhand einer Kennlinie für den jeweiligen Batteriestrang in Abhängigkeit von dem gemessenen SOC eingestellt wird. Auf Basis des ermittelten SOC und somit der verbleibenden Kapazität eines jeden Batteriestranges und einer entsprechenden Einstellung der Strangspannung, wird die Spannung im Fahrnetz verändert bzw. erhöht. Der Batteriestrang mit dem höchsten SOC stellt dabei die höchste Spannung ein und gibt im Ergebnis auch die höchste Leistung ab. Batteriestränge mit einem niedrigeren SOC erkennen aufgrund der Messung eine vorliegende, höhere Fahrnetzspannung, als aufgrund des eigenen SOC durch die interne Kennlinie als Strangspannung eingestellt werden würde. Es wird in diesem Fall eine geringere Leistungsabgabe von dem Batteriestrang mit dem geringeren SOC eingestellt. Je größer der Unterschied zwischen der gemessenen Fahrnetzspannung und der Strangspannung eines Stranges ist, desto geringer ist die abgegebene Leistung von diesem Strang. So kann sichergestellt werden, dass kein Batteriestrang überladen oder tiefenentladen wird. Vielmehr wird durch die Ermittlung des SOC und des davon abhängigen Regeln der Strangspannungen über die DC-DC-Steller der Ladezustand bzw. die Kapazität der einzelnen Batteriestränge aneinander angeglichen bzw. miteinander synchronisiert. Durch das Synchronisieren der Ladezustände kann ein gleichmäßiges Entladen erfolgen. Durch das gleichmäßige Entladen der parallelen Batteriestränge kann auch entsprechend ein gleichmäßiges Aufladen erfolgen, wodurch als Ergebnis die Lebensdauer der einzelnen Batterien erhöht werden kann.

Von dem Batteriestrang für den ein höherer SOC gemessen wurde, als bei einem parallelen Batteriestrang des gleichen Fahrnetzes wird ein höherer Strom in das Fahrnetz gespeist, als durch den Batteriestrang, für den ein geringerer SOC gemessen wurde. Beim Erreichen der Strombegrenzung des Batteriestranges mit dem höheren SOC oder Reduzierung des SOC wird die Fahrnetzspannung reduziert.

Unter Strangspannung ist die elektrische Spannung zu verstehen, die fahrnetzseitig über den DC-DC-Stellers zu messen ist. Im Allgemeinen sollte die Strangspannung annähernd mit der Fahrnetzspannung identisch sein. Aufgrund der elektrischen Konfiguration des Fahrnetzes kann die Spannung im Fahrnetz aber lokal unterschiedlich sein.

Insbesondere ist es vorgesehen, dass die Strangspannungen anhand einer Kennlinie für den jeweiligen Batteriestrang durch den DC-DC-Steller eingestellt werden. Durch die Steuerung der Strangspannung anhand einer Kennlinie, welche charakteristisch für den jeweiligen Batteriestrang ist, kann das Entladen bzw. Aufladen des Batteriestranges besonders effektiv und schonend erfolgen. Durch die Orientierung der DC-DC-Steller an den Kennlinien kann für die Strangspannungen genau der Bereich auf der Kennlinie eingestellt werden, in dem die Batterien besonders zuverlässig und gleichmäßig funktionieren. Bevorzugt ist für jeden DC-DC-Steller eine unterschiedliche Kennlinie vorgesehen.

Bevorzugt kann es die vorliegende Erfindung außerdem vorsehen, dass in den DC-DC-Stellern für unterschiedliche Lastströme der Batteriestränge lastabhängige Kennlinien und Stromgrenzwerte hinterlegt werden und die Strangspannungen der Batteriestränge in Abhängigkeit von der Last von den DC-DC-Stellern eingestellt werden. So ist es beispielsweise denkbar, dass bei einer außerordentlich hohen Belastung des Fahrnetzes für den Betrieb der Batteriestränge eine modifizierte, lastabhängige Kennlinie effizienter arbeitet, als eine Kennlinie für den Normalbetrieb. Insbesondere für einen Betrieb unterhalb von 20 % des SOC kann es vorgesehen sein, dass die Batteriestränge anhand einer angepassten Kennlinie betrieben werden. Durch diese Anpassung der Kennlinie an die jeweilige Lastsituation des Antriebssystems, kann gewährleistet werden, dass es auch in Extremsituationen nicht zu einer Tiefenentladung bzw. Überladung der Batterien kommt bzw. eine Tiefenentladung reduziert werden kann.

Insbesondere kann es vorgesehen sein, dass in jedem DC-DC-Steller die Stromabgabe an das Fahrnetz in Abhängigkeit von der Strangspannung eingestellt wird. Bevorzugt ist in jedem DC-DC-Steller eine Spannungs-Strom-Kennlinie für jeden Batteriestrang hinterlegt.

Ein weiteres vorteilhaftes Ausführungsbeispiel der vorliegenden Erfindung kann es vorsehen, dass von dem Batteriestrang für den ein höherer SOC gemessen wurde, als bei einem parallelen Batteriestrang des gleichen Fahrnetzes, ein höherer Strom in das Fahrnetz bis zum Erreichen einer Strombegrenzung gespeist wird, als durch den Batteriestrang für den ein geringerer SOC gemessen wurde. Ungleiche SOC zwischen parallelen Batteriesträngen können nach einer längeren Liegezeit des Unterseebootes oder nach dem Austausch einzelner Batterien auftreten. Durch Inbetriebnahme des Antriebsystems bzw. des Fahrnetzes gemäß der vorliegenden Erfindung gleichen sich die SOC der Batteriestränge aneinander an. Zunächst wird jedoch von einem Batteriestrang mit einer höheren Kapazität bzw. einem höheren SOC Strom in das Fahrnetz gespeist, sodass sich die SOC Niveaus der einzelnen Batteriestränge über die Zeit angleichen.

Des Weiteren kann es vorgesehen sein, dass beim Erreichen der Strombegrenzung des Batteriestranges mit dem höheren SOC oder Reduzierung des SOC die Fahrnetzspannung solange reduziert wird, bis weitere Batteriestränge ihre Stromabgabe erhöhen. Bevorzugt wird die Fahrnetzspannung auf die Spannung des Batteriestranges mit dem nächst geringeren SOC abgeregelt. Alternativ kann die Fahrnetzspannung des Batteriestranges auf die Spannung mit dem geringsten SOC abgeregelt werden, sodass sich die Last für diesen hohen Lastfall gleichmäßig auf die Batteriestränge des einen Fahrnetzes verteilt. Gleichermaßen kann es vorgesehen sein, dass sich die Fahrnetzspannungen mehrerer Fahrnetze angleichen bzw. synchronisiert werden. Durch diese Angleichung des SOC-Niveaus kann eine gleichmäßigere Entladung aller Batteriestränge erfolgen.

Bevorzugt kann es ein weiteres Ausführungsbeispiel der vorliegenden Erfindung vorsehen, dass die Fahrnetzspannung von den DC-DC-Stellern in einem Spannungsbereich, insbesondere zwischen einem SOC von 100 % (beispielsweise 700 Volt) und 20 % (beispielsweise 650 Volt), geregelt wird. Vorzugsweise wird die Fahrnetzspannung bzw. die Strangspannung der einzelnen Batteriestränge in einem Bereich geregelt, der sich weitestgehend linear verhält, wodurch die Verbraucher mit einem nahezu konstanten Strom bzw. Spannung versorgt werden. Dieser lineare Bereich ist besonders schonend für alle Verbraucher, da sie mit einer konstanten elektrischen Energie versorgt werden. Darüber hinaus ist keine ständige Anpassung bzw. Regelung von Spannungen notwendig, um die von dem Antriebssystem geforderte Energie zu generieren.

Außerdem kann es bevorzugt vorgesehen sein, dass schaltbedingte Spannungssprünge auf dem Fahrnetz durch Filter, vorzugsweise digitale oder analoge Eingangsfilter, des gemessenen Spannungseingangssignal geglättet werden. Dieses kann beispielsweise mittels eines Tiefpassfilters realisiert werden. Dadurch kann verhindert werden, dass die DC-DC-Steller der Batteriestränge aufgrund der Trägheit des Fahrnetzes nicht auf jede Spannungsschwankung reagieren. Insbesondere durch kurzfristige Lastschwankungen, die beispielsweise verursacht werden können durch Einschalten oder Abschalten von elektrischen Verbrauchern oder aber auch durch das Abwerfen von Last, kann es zu Spannungsschwankungen kommen, die durch das Fahrnetz abgefangen werden müssen. Durch die Filter werden vorzugsweise kleine Spannungsschwankungen geglättet.

Insbesondere kann es des Weiteren vorgesehen sein, dass eine Charakteristik einer Entladespannung der Batteriestränge durch die Steilheit deren Kennlinie linearisiert wird. Durch diese SOC-abhängige Anpassung der Kennlinie kann ein besonders effektiver und zuverlässiger Betrieb der Batteriestränge auch bei geringen SOC erreicht werden.

Des Weiteren ist es vorgesehen, dass durch die DC-DC-Steller die Batteriestränge in einen Lademodus versetzt werden, wenn ein vorbestimmtes Spannungsniveau in der Kennlinie durch einen Generator erreicht wird. Das vorbestimmte Spannungsniveau für das Umschalten in den Lademodus kann dabei vorteilhaft über der höchsten Spannung liegen, bei der Entladen wird, also der Strangspannung bei vollständigem Aufladen der Batterien, entsprechend 100 % SOC. Sobald es energetisch für das Fahrnetz bzw. für die Batteriestränge günstiger ist, in den Lademodus zu wechseln, werden die entsprechenden Batteriestränge bis zu einem maximalen SOC durch das Antriebssystem aufgeladen. Dieser Moduswechsel kann automatisch durch die BMS und/oder die DC-DC-Steller ausgeführt werden.

In einem entsprechenden Unterseeboot können die Ladezustände (SOC) der Batteriestränge durch jeweils ein Batterie-Management-System (BMS) bestimmbar sein und die Strangspannungen eines jeden Batteriestranges von dem jeweiligen DC-DC-Steller in Abhängigkeit von dem gemessenen SOC derart einstellbar sein, dass die SOC der einzelnen Batteriestränge untereinander synchronisiert sind. Durch die Bestimmung des SOC und somit der verbleibenden Kapazität mittels des BMS für jeden Batteriestrang kann verhindert werden, dass die Batteriestränge überladen oder tiefenentladen werden. Durch die Ermittlung der SOC und durch das davon abhängige Regeln der Strangspannungen über die DC-DC-Steller sind die Ladezustände bzw. die Kapazitäten der einzelnen Batteriestränge aneinander angleichbar bzw. synchronisierbar. Durch diese Synchronisierung der Ladezustände ist ein gleichmäßiges Entladen der Batteriestränge realisierbar. Durch das gleichmäßige Entladen der parallelen Batteriestränge kann auch entsprechend ein gleichmäßiges Aufladen erfolgen.

Bevorzugt kann es vorgesehen sein, dass in den DC-DC-Stellern für unterschiedliche Lastströme der Batteriestränge lastabhängige Kennlinien und Stromgrenzwerte hinterlegbar sind, anhand der die Strangspannungen der Batteriestränge in Abhängigkeit von der Last des Antriebssystems von den DC-DC-Stellern einstellbar sind. Durch diese lastabhängige Steuerung lassen sich die einzelnen Batteriestränge individuell und auf das gesamte Antriebssystem abgestimmt effizient entladen und/oder aufladen.

Bevorzugt kann es außerdem vorgesehen sein, dass die Batteriestränge eine Vielzahl von Lithiumionenbatterien aufweisen. Durch Variation der Anzahl der Lithiumionenbatterien eines jeden Stranges kann die Kapazität Bedarfsbedingt bestimmt werden. Es ist jedoch auch denkbar, dass in den Batteriesträngen andere Arten von Batterien verwendet werden.

Ein bevorzugtes Ausführungsbeispiel wird nachfolgend anhand der Zeichnung näher erläutert. In dieser zeigen:
- Fig. 1: einen Ausschnitt eines Antriebssystems mit zwei DC-DC-Stellern,
- Fig. 2: eine SOC-Kennlinie, und
- Fig. 3: eine SOC-Kennlinie.

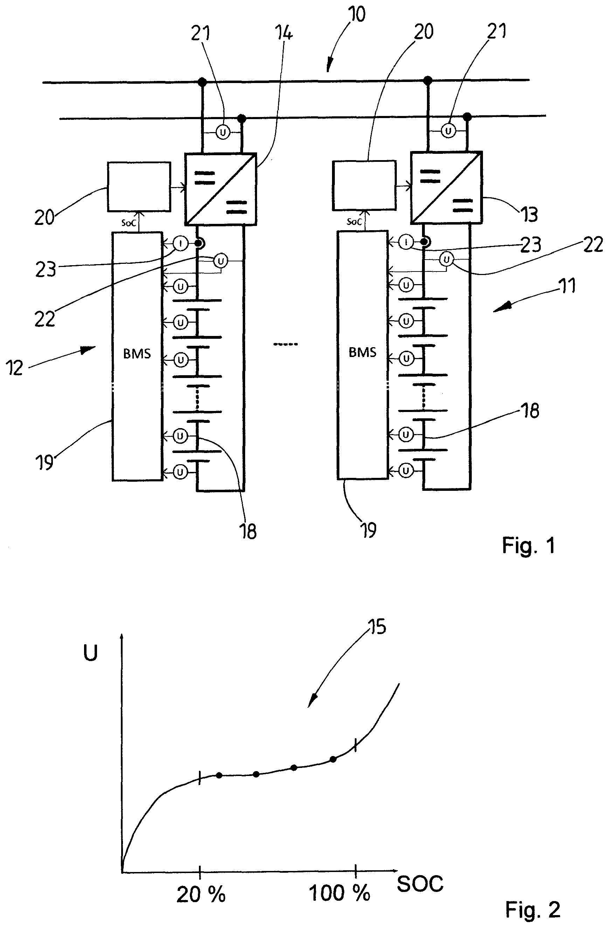

Fig. 1 zeigt einen Ausschnitt eines Fahrnetzes 10 eines Antriebssystems eines Unterseebootes. Diesem Fahrnetz 10 sind zwei parallele Batteriestränge 11, 12 zugeordnet. Jeder dieser Batteriestränge 11, 12 weist eine Vielzahl von in Reihe geschalteten Batterien 18, vorzugsweise Lithiumionenbatterien, auf.

Die einzelnen Batteriestränge 11, 12 sind jeweils durch einen DC-DC-Steller 13, 14 mit dem Fahrnetz 10 gekoppelt. An dieser Stelle soll ausdrücklich darauf hingewiesen werden, dass es erfindungsgemäß auch denkbar ist, dass das Antriebssystem mehr als ein Fahrnetz 10 aufweisen kann, denen wiederum jeweils mehrere weitere parallele Batteriestränge 11, 12 zugeordnet sind. Üblicherweise weist ein gattungsgemäßes Antriebssystem 30 bis 60 Batteriestränge 11, 12 auf, sodass jedem Fahrnetz 10 eine Vielzahl von Batteriesträngen 11, 12 zugeordnet sind.

Gemäß der vorliegenden Erfindung weist jeder Batteriestrang 11, 12 mindestens ein Batterie-Management-System (BMS) 19 auf. Dieses BMS 19 ermittelt den Ladezustand (SOC, State Of Charge) eines jeden Batteriestranges 11, 12. Der für jeden Strang 11, 12 ermittelte SOC wird sodann von dem BMS 19 über eine Regeleinrichtung 20 an den entsprechenden DC-DC-Steller 13, 14 übermittelt. Daraufhin wird die Strangspannung eines jeden Batteriestranges 11, 12 von dem DC-DC-Steller 13, 14 in Abhängigkeit von dem SOC eingestellt.

In dem in der Fig. 2 dargestellten Diagramm ist die Batteriespannung U in Abhängigkeit von dem SOC der Batterie dargestellt. Aus der in Fig. 2 dargestellten Kurve 15 wird deutlich, dass die Batteriespannung U in einem Bereich von 20 % bis 100 % des SOC nahezu konstant ist. Dieser Bereich zwischen 20 % und 100 % des SOC stellt somit für den Betrieb des Antriebssystems des Unterseebootes einen bevorzugten Betriebsbereich dar, da hier die durch die einzelnen Batteriestränge 11, 12 zur Verfügung gestellte elektrische Energie relativ konstant ist.

Durch die Bestimmung der einzelnen SOC eines jeden Batteriestranges 11, 12 durch die BMS 19 steuern die DC-DC-Steller 13, 14 die Strangspannungen der einzelnen Batteriestränge 11, 12 derart, dass jeder dieser Stränge 11, 12 bevorzugt in diesem linearen Bereich betrieben wird. Wird ein SOC festgestellt, der über dem Wert 100 % liegt, wird dieser Strang 11, 12 derart angesteuert, dass elektrische Energie zunächst von diesem Strang 11, 12 in das Fahrnetz 10 gespeist wird, bis ein entsprechender Wert unter 100 % der SOC erreicht ist. Gleichermaßen wird für einen Batteriestrang 11, 12, dessen SOC nahe oder unter 20 % liegt von dem elektrischen Verbraucher entkoppelt, sodass dieser von den übrigen Batteriesträngen 11, 12 mit elektrischer Energie versorgt wird.

Über die Zeit sollte sich somit in allen Batteriesträngen 11, 12 des Fahrnetzes 10 ein homogener SOC einstellen. Durch diese Synchronisierung der einzelnen Batteriestränge untereinander können die Stränge 11, 12 besonders effektiv und über einen langen Zeitraum genutzt werden.

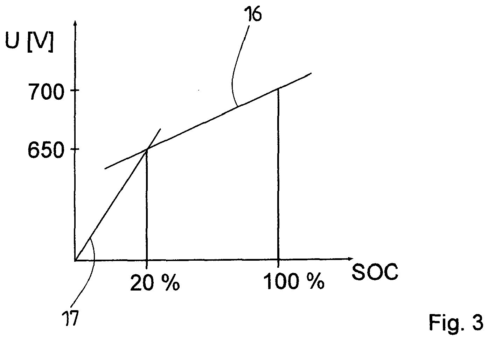

Die Steuerung bzw. die Synchronisierung der Strangspannungen der Batteriestränge 11, 12 erfolgt automatisch über die BMS 19 bzw. über die DC-DC-Steller 13, 14. Wenn an dem Fahrnetz 10 eine besonders hohe elektrische Last anliegt, kann die für die Batteriestränge 11, 12 hinterlegte Kennlinie und die Stromgrenzwerte variiert werden, sodass auch unter einer erhöhten Last die Batteriestränge 11, 12 in einem bevorzugten relativ linearen Kennlinienbereich 16 betrieben werden (Fig. 3).

Für bestimmte Situationen, insbesondere für Unterwasserfahrten, kann es wesentlich sein, dass die Batteriestränge 11, 12 das Fahrnetz 10 auch unter 20 % des SOC noch effizient und zuverlässig mit elektrischer Energie versorgen. Sobald von dem BMS 19 für die Fahrstränge 11, 12 ein SOC unter 20 % ermittelt wird, werden die Batteriestränge 11, 12 gemäß einer für diesen Fall hinterlegten Kennlinie 17 betrieben (Fig. 3). Durch dieses gezielte Betreiben der Batteriestränge 11, 12 bei einem niedrigen SOC kann die Tiefenentladung der einzelnen Batteriezellen verringert bzw. vermieden werden.

### Bezugszeichenliste:

- 10: Fahrnetz
- 11: Batteriestrang
- 12: Batteriestrang
- 15: DC-DC-Steller
- 14: DC-DC-Steller
- 15: Kurve
- 16: Kennlinie
- 17: Kennlinie
- 18: Batterie
- 19: Batterie-Management-System (BMS)
- 20: Regeleinrichtung
- 21: Strangspannung
- 22: Batteriestrangspannung
- 23: Batteriestrangstrom

## Patentansprüche

1. Verfahren zum Betreiben eines Antriebssystems eines Unterseebootes mit mindestens einem elektrischen Fahrnetz (10) zur Versorgung von Verbrauchern mit elektrischer Energie, wobei jedem Fahrnetz (10) mindestens zwei parallele Batteriestränge (11, 12) zugeordnet sind, die durch jeweils einen DC-DC-Steller (13, 14) mit dem Fahrnetz (10) gekoppelt werden, wobei die jeweiligen Ladezustände (SOC) der mindestens zwei Batteriestränge (11, 12) eines Fahrnetzes (10) miteinander synchronisiert werden, indem von jeweils einem Batterie-Management-System (BMS) (19) der SOC eines jeden Batteriestranges (11, 12) gemessen wird und eine Strangspannung (21) eines jeden Batteriestranges (11, 12) von dem jeweiligen DC-DC-Steller (13, 14) anhand einer Kennlinie für den jeweiligen Batteriestrang (11, 12) in Abhängigkeit von dem gemessenen SOC eingestellt wird, wobei von dem Batteriestrang (11, 12) für den ein höherer SOC gemessen wurde, als bei einem parallelen Batteriestrang (11, 12) des gleichen Fahrnetzes (10), ein höherer Strom in das Fahrnetz (10) gespeist wird, als durch den Batteriestrang (11, 12), für den ein geringerer SOC gemessen wurde **dadurch gekennzeichnet, dass** beim Erreichen der Strombegrenzung des Batteriestranges (11, 12) mit dem höheren SOC oder Reduzierung des SOC die Fahrnetzspannung reduziert wird.

2. Verfahren nach Anspruch 1, **dadurch gekennzeichnet, dass** in den DC-DC-Stellern (13, 14) für unterschiedliche Lastströme der Batteriestränge (11, 12) lastabhängige Kennlinien (13, 17) und Stromgrenzwerte hinterlegt werden und die Strangspannungen der Batteriestränge (11, 12) in Abhängigkeit von der Last von den DC-DC-Stellern (13, 14) eingestellt werden.

3. Verfahren nach Anspruch 1 oder 2, **dadurch gekennzeichnet, dass** von den DC-DC-Stellern (13, 14) die Stromabgabe an das Fahrnetz (10) in Abhängigkeit von der Strangspannung (21) eingestellt wird.

4. Verfahren nach einem der vorhergehenden Ansprüche, **dadurch gekennzeichnet, dass** von dem Batteriestrang (11, 12) für den ein höherer SOC gemessen wurde, als bei einem parallelen Batteriestrang (11, 12) des gleichen Fahrnetzes (10), ein höherer Strom in das Fahrnetz (10) bis zum Erreichen einer Strombegrenzung gespeist wird, als durch den Batteriestrang (11, 12), für den ein geringerer SOC gemessen wurde.

5. Verfahren nach Anspruch 4, **dadurch gekennzeichnet, dass** beim Erreichen der Strombegrenzung des Batteriestranges (11, 12) mit dem höheren SOC oder Reduzierung des SOC die Fahrnetzspannung solange reduziert wird, bis weitere Batteriestränge (11, 12) ihre Stromabgabe erhöhen.

6. Verfahren nach Anspruch 4 oder 5, **dadurch gekennzeichnet, dass** die Fahrnetzspannung des Batteriestranges (11, 12) auf die Spannung mit dem nächst geringeren oder dem geringsten SOC abgeregelt wird, sodass sich die Last gleichmäßig auf die Batteriestränge (11, 12) des einen Fahrnetzes (10) verteilt.

7. Verfahren nach einem der vorherigen Ansprüche, **dadurch gekennzeichnet, dass** die Strangspannungen jeweils eines Batteriestranges (11, 12) von dem jeweiligen DC-DC-Stellern (13, 14) in einem bestimmten Spannungsbereich, insbesondere in einem bestimmten SOC - Bereich, von 100 % (bspw. 700 V) und 20 % (bspw. 650 V), geregelt wird.

8. Verfahren nach einem der vorherigen Ansprüche, **dadurch gekennzeichnet, dass** schaltbedingte Spannungssprünge des gemessenen Eingangssignals auf dem Fahrnetz (10) durch Filter, vorzugsweise digitale oder analoge Eingangsfilter, insbesondere durch Tiefpassfilter, geglättet werden.

9. Verfahren nach einem der vorherigen Ansprüche, **dadurch gekennzeichnet, dass** eine Charakteristik einer Entladespannung einzelner Batteriemodule der Batteriestränge (11, 12) bzw. der Batteriestränge (11, 12) durch eine SOC-abhängige Anpassung der Kennlinie linearisiert wird.

10. Verfahren nach einem der vorherigen Ansprüche, **dadurch gekennzeichnet, dass** durch die DC-DC-Steller (13, 14) die Batteriestränge (11, 12) in einen Lademodus versetzen werden, wenn ein vorbestimmtes Spannungsniveau in der Kennlinie durch einen Generator erreicht wird.

## Claims

1. A method for operating a drive system of a submarine with at least one electrical traction network (10) for supplying at least one consumer with electrical energy, wherein at least two parallel battery banks (11, 12), each of which is linked to the traction network (10) by a DC-DC converter (13, 14), are assigned to each traction network (10), wherein the respective states of charge (SOC) of the at least two battery banks (11, 12) of a traction network (10) are synchronized with each other by the SOC of each battery bank (11, 12) being measured in each case by a battery management system (BMS) (19), and a bank voltage (21) of each battery bank (11, 12) being set by the respective DC-DC converter (13, 14) on the basis of a characteristic curve for the respective battery bank (11, 12) depending on the measured SOC, wherein the battery bank (11, 12), for which a higher SOC was measured than in the case of a parallel battery bank (11, 12) of the same traction network (10), feeds a higher current into the traction network (10), than the battery bank (11, 12) for which a lower SOC was measured **characterized in that** on a current limitation of the battery bank (11, 12) with the higher SOC being reached or on reduction of the SOC, the traction network voltage is reduced.

2. The method as claimed in claim 1, **characterized in that** load-dependent characteristic curves (16, 17) and current limit values for different load currents of the battery banks (11, 12) are stored in the DC/DC converters (13, 14) and the bank voltages of the battery banks (11, 12) are set by the DC-DC converters (13, 14) depending on the load.

3. The method as claimed in claim 1 or 2, **characterized in that** the DC-DC converters (13, 14) set the power output to the traction network (10) as a function of the bank voltage (21).

4. The method as claimed in one of the preceding claims, **characterized in that** the battery bank (11, 12), for which a higher SOC was measured than in the case of a parallel battery bank (11, 12) of the same traction network (10), feeds a higher current into the traction network (10) until a current limit is reached, than the battery bank (11, 12) for which a lower SOC was measured.

5. The method as claimed in claim 4, **characterized in that** on a current limitation of the battery bank (11, 12) with the higher SOC being reached or on reduction of the SOC, the traction network voltage is reduced until other battery banks (11, 12) increase their power output.

6. The method as claimed in claim 4 or 5, **characterized in that** the traction network voltage of the battery bank (11, 12) is reduced to the voltage with the next lower or the lowest SOC, so that the load is distributed evenly over the battery banks (11, 12) of the one traction network (10).

7. The method as claimed in one of the preceding claims, **characterized in that** the bank voltages of one battery bank (11, 12) are regulated by the respective DC-DC converters (13, 14) in a specific voltage range, in particular in a specific SOC range, of 100% (e.g. 700 V) and 20% (e.g. 650 V).

8. The method as claimed in one of the preceding claims, **characterized in that** the switching-related voltage jumps of the measured input signal on the traction network (10) are smoothed by filters, preferably digital or analog input filters, in particular by low-pass filters.

9. The method as claimed in one of the preceding claims, **characterized in that** a characteristic of a discharge voltage of individual battery modules of the battery banks (11, 12) or of the battery banks (11, 12) is linearized by a SOC-dependent fitting of the characteristic curve.

10. The method as claimed in one of the preceding claims, **characterized in that** the battery banks (11, 12) are transferred into a charging mode by the DC-DC converters (13, 14) when a predetermined voltage level in the characteristic curve is reached by a generator.

## Revendications

1. Procédé de fonctionnement d'un système d'entraînement d'un sous-marin comprenant au moins un réseau de propulsion électrique (10) destiné à l'alimentation de consommateurs en énergie électrique, chaque réseau de propulsion (10) étant associé à au moins deux lignes de batteries parallèles (11, 12) qui sont couplées chacune au réseau de propulsion (10) par le biais d'un régulateur continu-continu (13, 14), les états de charge respectifs (SOC) des au moins deux lignes de batteries (11, 12) d'un réseau de propulsion (10) étant synchronisés entre eux en ce que le SOC de chaque ligne de batteries (11, 12) est mesuré par un système de gestion de batteries (BM)(19) et une tension de ligne (21) de chaque ligne de batteries (11, 12) est réglée par le régulateur continu-continu respectif (13, 14) à l'aide d'une caractéristique relative à la ligne de batteries respective (11, 12) en fonction du SOC mesuré, la ligne de batteries (11, 12), pour laquelle un SOC plus élevé que celui d'une ligne de batteries parallèle (11, 12) du même réseau de propulsion (10) a été mesuré, injectant dans le réseau de propulsion (10) un courant plus élevé que celui injecté par la ligne de batteries (11, 12) pour laquelle un SOC plus faible a été mesuré, **caractérisé en ce que**, lorsque la limite de courant de la ligne de batteries (11, 12) ayant le SOC plus élevé est atteinte ou lorsque le SOC est réduit, la tension de réseau de propulsion est réduite.

2. Procédé selon la revendication 1, **caractérisé en ce que** des caractéristiques (13, 17) dépendant de la charge et des valeurs limites de courant sont stockées dans les régulateurs continu-continu (13, 14) pour différents courants de charge des lignes de batteries (11, 12) et les tensions de ligne des lignes de batteries (11, 12) peuvent être réglées par les régulateurs continu-continu (13, 14) en fonction de la charge.

3. Procédé selon la revendication 1 ou 2, **caractérisé en ce que** les régulateurs continu-continu (13, 14) règlent le courant délivré au réseau de propulsion (10) en fonction de la tension de ligne (21).

4. Procédé selon l'une des revendications précédentes, **caractérisé en ce que** la ligne de batteries (11, 12), pour laquelle un SOC plus élevé que celui d'une ligne de batteries parallèle (11, 12) du même réseau de propulsion (10) a été mesuré, injecte dans le réseau de propulsion (10) un courant plus élevé que celui injecté par la ligne de batteries (11, 12) pour laquelle un SOC plus faible a été mesuré, jusqu'à ce qu'une limite de courant soit atteinte.

5. Procédé selon la revendication 4, **caractérisé en ce que**, lorsque la limite de courant de la ligne de batteries (11, 12) ayant le SOC le plus élevé est atteinte ou lorsque le SOC est réduit, la tension de réseau de propulsion est réduite jusqu'à ce que d'autres lignes de batteries (11, 12) augmentent leur courant délivré.

6. Procédé selon la revendication 4 ou 5, **caractérisé en ce que** la tension de réseau de propulsion de la ligne de batteries (11, 12) est régulée à la tension ayant le SOC immédiatement inférieur ou le plus faible de sorte que la charge soit uniformément répartie sur la ligne de batteries (11, 12) de l'un des réseaux de propulsion (10).

7. Procédé selon l'une des revendications précédentes, **caractérisé en ce que** les tensions de ligne de chaque ligne de batteries (11, 12) sont régulées par des régulateurs continu-continu respectifs (13, 14) dans une plage de tension déterminée, en particulier dans une gamme de SOC déterminée, de 100 % (par exemple 700 V) et de 20 % (par exemple 650 V).

8. Procédé selon l'une des revendications précédentes, **caractérisé en ce que** des sauts de tension, dus à une commutation, du signal d'entrée mesuré sur le réseau de propulsion (10) sont lissés par des filtres, de préférence des filtres d'entrée numériques ou analogiques, notamment des filtres passe-bas.

9. Procédé selon l'une des revendications précédentes, **caractérisé en ce qu'**une caractéristique d'une tension de décharge de modules de batteries individuels des lignes de batteries (11, 12) ou des lignes de batteries (11, 12) est linéarisée par une adaptation de la caractéristique en fonction du SOC.

10. Procédé selon l'une des revendications précédentes, **caractérisé en ce que** les lignes de batteries (11, 12) sont mises dans un mode de charge par les régulateurs continu-continu (13, 14) lorsqu'un niveau de tension prédéterminé dans la caractéristique est atteint par un générateur.
